# EUROPÄISCHE PATENTANMELDUNG

(11) **EP 2 184 658 A2**
(43) Veröffentlichungstag der Anmeldung: **12.05.2010**
(21) Anmeldenummer: 09174050.6
(22) Anmeldetag: 26.10.2009
(51) Int. Cl.: G05B 19/408

(54) **Vorrichtung und Verfahren zum Sammeln und Bereitstellen von Daten mindestens einer Druckmaschine**

(30) Priorität: 06.11.2008 DE 102008043522
(71) Anmelder: manroland AG, 63075 Offenbach (DE)
(72) Erfinder: Schepp, Markus, 61191, Rosbach v.d.H. (DE); Hötter, Michael, 61462 Königstein (DE); Klingler, Horst, 63165, Mühlheim (DE)

(57) **Zusammenfassung**

Die Erfindung betrifft eine Vorrichtung (10) zum Sammeln und Bereitstellen von Daten mindestens einer Druckmaschine (11), nämlich zum Sammeln von Daten, die Steuerungseinrichtungen (12, 13, 14, 15, 16) mindestens einer Druckmaschine in einem steuerungseinrichtungsindividuellen Protokoll und/oder Format speichern, und zum Bereitstellen der Daten an einer Diagnoseeinrichtung (17), um ein Ereignis, das an mindestens einer Druckmaschine auftritt, auf Grundlage der Daten zu analysieren, mit: a) einem Sammelmodul (19), mit Hilfe dessen die an den Steuerungseinrichtungen (12, 13, 14, 15, 16) der oder jeder Druckmaschine gespeicherten Daten sammelbar sind; b) einem Konvertierungsmodul (20), mit Hilfe dessen die gesammelten Daten in ein für alle Daten einheitliches Protokoll und Format konvertierbar sind; c) einer Datenbank (22), in der die gesammelten und konvertierten Daten speicherbar sind; d) einem Bereitstellungsmodul (23), mit Hilfe dessen abhängig von mindestens einem frei definierbaren Auswahlkriterium auf die in der Datenbank (22) gespeicherten Daten zugreifbar ist, um die auf Grundlage des oder jedes Auswahlkriteriums ausgewählten Daten an der Diagnoseeinrichtung (17) bereitzustellen. (Fig. 1)

## Beschreibung

Die Erfindung betrifft eine Vorrichtung zum Sammeln und Bereitstellen von Daten mindestens einer Druckmaschine. Des Weiteren betrifft die Erfindung ein Verfahren zum Sammeln und Bereitstellen von Daten mindestens einer Druckmaschine.

Eine Druckmaschine verfügt über eine Vielzahl von Steuerungseinrichtungen, um den Betrieb von einzelnen Baugruppen bzw. Modulen der Druckmaschine zu steuern bzw. zu regeln. Die einzelnen Steuerungseinrichtungen unterscheiden sich dabei typischerweise hinsichtlich der Art und Weise, wie dieselben steuerungsrelevante Daten speichern. So speichern die einzelnen Steuerungseinrichtungen einer Druckmaschine steuerungsrelevante Daten typischerweise in steuerungseinrichtungsindividuellen Protokollen und Formaten. Dann, wenn an einer Druckmaschine ein Ereignis auftritt, dessen Ursache näher analysiert bzw. diagnostiziert werden soll, muss auf die Daten der einzelnen Steuerungseinrichtungen zugegriffen werden. Da jedoch die einzelnen Steuerungseinrichtungen die Daten in einem individuellen Protokoll und/oder Format speichern, bereitet der einheitliche Zugriff auf die in den Steuerungseinrichtungen gespeicherten Daten sowie die Auswertung derselben Schwierigkeiten. Es besteht daher Bedarf an einer Vorrichtung und einem Verfahren zum Sammeln und Bereitstellen von Daten mindestens einer Druckmaschine, mit Hilfe derer der Zugriff auf die in den einzelnen Steuerungseinrichtungen der oder jeder Druckmaschine gespeicherten Daten sowie die Auswertung derselben erleichtert wird.

Unter Steuerungseinrichtungen einer Druckmaschine sollen auch Fremdaggregate einer Druckmaschine und Bussysteme einer Druckmaschine verstanden werden können.

Hiervon ausgehend liegt der vorliegenden Erfindung das Problem zugrunde eine neuartige Vorrichtung sowie ein neuartiges Verfahren zum Sammeln und Bereitstellen von Daten mindestens einer Druckmaschine zu schaffen. Dieses Problem wird durch eine Vorrichtung gemäß Anspruch 1 gelöst. Die erfindungsgemäße Vorrichtung umfasst: a) ein Sammelmodul, mit Hilfe dessen die an den Steuerungseinrichtungen der oder jeder Druckmaschine gespeicherten Daten sammelbar sind; b) ein Konvertierungsmodul, mit Hilfe dessen die gesammelten Daten in ein für alle Daten einheitliches Protokoll und Format konvertierbar sind; c) eine Datenbank, in der die gesammelten und konvertierten Daten speicherbar sind; d) ein Bereitstellungsmodul, mit Hilfe dessen abhängig von mindestens einem frei definierbaren Auswahlkriterium auf die in der Datenbank gespeicherten Daten zugegriffen werden kann, um die auf Grundlage des oder jedes Auswahlkriteriums ausgewählten Daten an der Diagnoseeinrichtung bereitzustellen.

Mit Hilfe der erfindungsgemäßen Vorrichtung kann automatisiert auf sämtliche in den Steuerungseinrichtungen in einem steuerungseinrichtungsindividuellen Protokoll und/oder Format gespeicherten Daten zugegriffen werden, wobei die erfindungsgemäße Vorrichtung die entsprechenden Daten konvertiert und in einem einheitlichen Protokoll und Format in einer Datenbank speichert. Auf diese Datenbank kann mit Hilfe eines Bereitstellungsmoduls derart zugegriffen werden, dass auf Grundlage mindestens eines frei definierbaren Auswahlkriteriums aus der Gesamtheit der in der Datenbank gespeicherten Daten eine Teilmenge ausgewählt und an der Diagnoseeinrichtung bereitgestellt wird. Abhängig von dem oder jedem Auswahlkriterium sind demnach an der Diagnoseeinrichtung sämtliche relevanten Daten verfügbar, um ein an einer Druckmaschine auftretendes Ereignis zu analysieren bzw. zu diagnostizieren. Mit der Erfindung ist eine einfache und einheitliche Handhabung von Daten sowie eine einfache und einheitliche Diagnose von an einer Druckmaschine auftretenden Ereignissen möglich. Hiermit kann letztendlich die Transparenz von Prozessen an einer Druckmaschine gesteigert werden.

Das erfindungsgemäße Verfahren zum Sammeln und Bereitstellen von Daten mindestens einer Druckmaschine ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

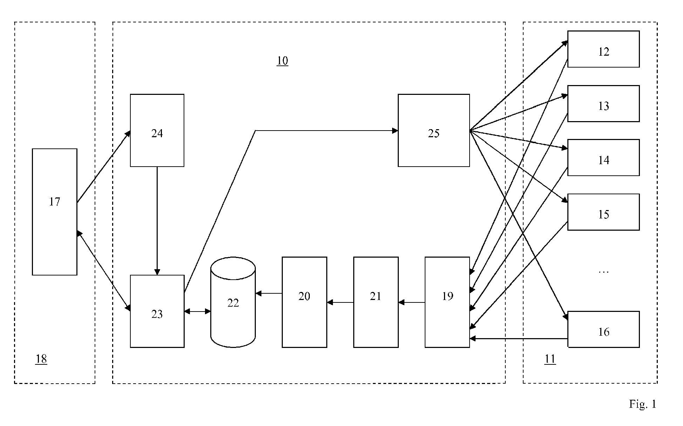

- Fig. 1:: eine stark schematisierte Darstellung einer erfindungsgemäßen Vorrichtung zum Sammeln und Bereitstellen von Daten mindestens einer Druckmaschine zusammen mit Steuerungseinrichtungen mindestens einer Druckmaschine sowie zusammen mit einer Diagnoseeinrichtung eines druckmaschinenherstellerseitigen Ferndiagnosesystems.

Fig. 1 zeigt eine stark schematisierte Darstellung einer erfindungsgemäßen Vorrichtung 10 zum Sammeln und Bereitstellen von Daten mindestens einer Druckmaschine 11. In Fig. 1 ist lediglich eine Druckmaschine 11 gezeigt, es können jedoch auch mehrere Druckmaschinen 11 vorhanden sein. Die Druckmaschine 11 umfasst mehrere Steuerungseinrichtungen 12, 13, 14, 15 und 16, wobei die einzelnen Steuerungseinrichtungen 12 bis 16 die Funktion von Baugruppen bzw. Modulen der Druckmaschine steuern bzw. regeln, und wobei die einzelnen Steuerungseinrichtungen 12 bis 16 steuerungsrelevante Daten in einem steuerungseinrichtungsindividuellen Protokoll und/oder Format speichern.

Mit der erfindungsgemäßen Vorrichtung 10 zum Sammeln und Bereitstellen von Daten ist es nun möglich, auf die in den Steuerungseinrichtungen 12 bis 16 der Druckmaschine 11 gespeicherten Daten automatisiert und einheitlich zuzugreifen und die Daten einer Diagnoseeinrichtung 17 bereitzustellen, wobei die Diagnoseeinrichtung 17 typischerweise Bestandteil eines druckmaschinenherstellerseitigen Ferndiagnosesystems 18 ist.

Bei der Druckmaschine 11 handelt es sich um eine druckereiindividuelle Maschineninstallation bzw. Maschinenkonfiguration, wobei die erfindungsgemäße Vorrichtung 10 zum Sammeln und Bereitstellen von Daten Bestandteil der druckereiindividuellen Druckmaschineninstallation ist. Das Ferndiagnosesystem 18 tauscht mit der erfindungsgemäßen Vorrichtung 10 Daten aus, und zwar vorzugsweise über das Internet.

Die erfindungsgemäße Vorrichtung 10 zum Sammeln und Bereitstellen von Daten mindestens einer Druckmaschine 11 verfügt über ein Sammelmodul 19, mit Hilfe dessen die an den Steuerungseinrichtungen 12 bis 16 der Druckmaschine 11 gespeicherten Daten sammelbar sind. Das Sammelmodul sammelt dabei sämtliche an den Steuerungseinrichtungen 12 bis 16 der Druckmaschine 11 verfügbaren und gespeicherten Daten ein, und zwar in dem steuerungseinrichtungsindividuellen Protokoll und Format, in welchem die Daten in den Steuerungseinrichtungen 12 bis 16 der Druckmaschine 11 gespeichert sind.

Die mit Hilfe des Sammelmoduls 19 gesammelten Daten sind mit Hilfe eines Konvertierungsmoduls 20 in ein für alle Daten einheitliches Protokoll und Format konvertierbar, wobei die Daten nach dem Sammeln mit Hilfe des Sammelmoduls 19 und vor dem Konvertieren mit Hilfe des Konvertierungsmoduls 20 vorzugsweise mit Hilfe eines Dekodiermoduls 21 derart dekodiert werden, dass in einem Binärcode vorliegende Statuseinträge und/oder Fehlereinträge der jeweiligen Steuerungseinrichtung 12 bis 16 in Textmeldungen gewandelt werden.

Nach dem Konvertieren der von den Steuerungseinrichtungen 12 bis 16 eingesammelten Daten werden dieselben in einer Datenbank 22 gespeichert, und zwar in dem vom Konvertierungsmodul 20 vorgegebenen Protokoll und Format.

Auf die in der Datenbank 22 in dem einheitlichen Protokoll und Format gespeicherten Daten kann mit Hilfe eines Bereitstellungsmoduls 23 zugegriffen werden, und zwar abhängig von mindestens einem frei definierbaren Auswahlkriterium, welches in einem Auswahlmodul 24 über die Diagnoseeinrichtung 17 definiert wird.

Das oder jedes Auswahlkriterium definiert demnach einen Filter, um aus der Gesamtmenge der in der Datenbank 22 gespeicherten Daten über das Bereitstellungsmodul 23 eine Teilmenge herauszulösen und diese Teilmenge über das Bereitstellungsmodul 23 der Diagnoseeinrichtung 17 bereitzustellen.

Als wichtigstes Auswahlkriterium, welches im Auswahlmodul 24 definierbar ist und auf Grundlage dessen das Bereitstellungsmodul 23 aus der Gesamtheit der in der Datenbank 22 gespeicherten Daten eine Teilmenge auswählt, handelt es sich um ein Zeitfenster bzw. Zeitintervall. Soll z. B. ein an einer Druckmaschine zu einem Zeitpunkt aufgetretenes Ereignis in der Diagnoseeinrichtung 17 analysiert bzw. diagnostiziert werden, wo wird als Auswahlkriterium im Auswahlmodul 24 ein Zeitfenster bzw. Zeitintervall definiert, in welchem der Zeitpunkt liegt, in welchem das zu analysierende Ereignis aufgetreten ist.

Als weiteres Auswahlkriterium neben einem solchen Zeitfenster bzw. Zeitintervall können im Auswahlmodul 24 auch eine Teilmenge von Steuerungseinrichtungen 12 bis 16 der Druckmaschine 11 definiert werden, auf deren Daten zugegriffen werden soll.

Soll z. B. ein Ereignis, das an einem Druckwerk einer Bogendruckmaschine auftritt, näher analysiert werden, so muss unter Umständen auf Daten, die Steuerungseinrichtungen eines Anlegers sowie Auslegers speichern, nicht zugegriffen werden, sodass dann über ein geeignetes Auswahlkriterium auf diese Daten vom Bereitstellungsmodul 23 nicht zugegriffen wird, sondern ausschließlich auf die Daten der Druckwerke.

Die erfindungsgemäße Vorrichtung 10 verfügt gemäß Fig. 1 weiterhin über ein Aktivierungsmodul 25, mit Hilfe dessen das steuerungseinrichtungsindividuelle Speichern von Daten in den einzelnen Steuerungseinrichtungen 12 bis 16 der Druckmaschine aktiviert sowie deaktiviert werden kann. Weiterhin ist es mit Hilfe des Aktivierungsmoduls 20 möglich, den Protokollierungslevel in den Steuerungseinrichtungen 12 bis 16 der Druckmaschine 11 zu beeinflussen.

Neben dem bloßen Aktivieren und Deaktivieren des Speicherns von Daten in den Steuerungseinrichtungen 12 bis 16 kann über den Protokollierungslevel der Detaillierungsgrad des Speicherns von Daten in den Steuerungseinrichtungen 12 bis 16 beeinflusst werden.

Mit der Erfindung ist es demnach möglich, Daten, die in Steuerungseinrichtungen 12 bis 16 einer Druckmaschine 11 in einem individuellen Format und/oder Protokoll gespeichert sind, automatisiert einzusammeln und automatisiert zu konvertieren, sodass die gesammelten und konvertierten Daten automatisiert in einem einheitlichen Protokoll und Format in einer Datenbank 22 gespeichert werden. Auf die Gesamtheit dieser in einem einheitlichen Format und Protokoll gespeicherten Daten wird mit Hilfe des Bereitstellungsmoduls 23 zugegriffen, und zwar auf Basis mindestens eines Auswahlkriteriums, welches zumindest ein Zeitfenster für die Daten definiert, auf die mit Hilfe des Bereitstellungsmoduls 23 zugegriffen werden soll und die vom Bereitstellungsmodul 23 der Diagnoseeinrichtung 17 bereitgestellt werden sollen.

Entsprechende Auswahlkriterien, auf Grundlage derer die Bereitstellungseinrichtung 23 aus der Gesamtheit der in der Datenbank 22 gespeicherten Daten eine Teilmenge selektiert, sind im Auswahlmodul 24 frei definierbar, und zwar über die Diagnoseeinrichtung 17 des Ferndiagnosesystems 18.

Wie bereits ausgeführt, greift das Bereitstellungsmodul 23 auf die in der Datenbank 22 bereitgestellten Daten zu und wählt aus der Gesamtheit dieser Daten eine Teilmenge aus, die in einem definierten Zeitfenster liegen und von einer Vielzahl unterschiedlichen Steuerungseinrichtungen 12 bis 16 der Druckmaschine 11 stammen. Dabei werden die von unterschiedlichen Steuerungseinrichtungen 12 bis 16 der Druckmaschine 11 stammenden Daten, die das Bereitstellungsmodul 23 der Diagnoseeinrichtung 17 bereitstellt, zeitchronologisch aufgelistet, und zwar unabhängig davon, von welcher Steuerungseinrichtung 12 bis 16 die Daten stammen. Hierdurch ist dann an der Diagnoseeinrichtung 17 zeitchronologisch im Sinne einer Historie nachvollziehbar, in welcher zeitlichen Reihenfolge die Daten an den einzelnen Steuerungseinrichtungen 12 bis 16 aufgetreten sind.

Dieses zeitchronologische Sortieren der von unterschiedlichen Steuerungseinrichtungen 12 bis 16 der Druckmaschine 11 stammenden Daten wird auch als Zeitkämmung bezeichnet.

Es sei darauf hingewiesen, dass selbstverständlich auch ein anderes Sortierungskriterium für die Daten gewählt werden kann, auf die das Bereitstellungsmodul 23 zugreift und die dasselbe der Diagnoseeinrichtung 17 bereitstellt. So kann z. B. als Sortierungskriterium für Daten nach Empfängern von Daten oder nach Sendern von Daten sortiert werden.

Wie bereits ausgeführt, ist die Diagnoseeinrichtung 17 vorzugsweise Bestandteil eines druckmaschinenherstellerseitigen Ferndiagnosesystems 18, wobei dann die Diagnoseeinrichtung 17 mit der erfindungsgemäßen Vorrichtung 10, nämlich dem Bereitstellungsmodul 23 und dem Auswahlmodul 24, Daten über das Internet austauscht. Es sei darauf hingewiesen, dass die Diagnoseeinrichtung 17 jedoch auch Bestandteil eines Leitstands einer Druckmaschine sein kann, wobei dann die erfindungsgemäße Vorrichtung 10 mit einer in einen Leitstand integrierten Diagnoseeinrichtung 17 Daten austauscht.

### Bezugszeichenliste

- 10: Vorrichtung
- 11: Druckmaschine
- 12: Steuerungseinrichtung
- 13: Steuerungseinrichtung
- 14: Steuerungseinrichtung
- 15: Steuerungseinrichtung
- 16: Steuerungseinrichtung
- 17: Diagnoseeinrichtung
- 18: Ferndiagnosesystem
- 19: Sammelmodul
- 20: Konvertierungsmodul
- 21: Dekodiermodul
- 22: Datenbank
- 23: Bereitstellungsmodul
- 24: Auswahlmodul
- 25: Aktivierungsmodul

## Patentansprüche

1. Vorrichtung zum Sammeln und Bereitstellen von Daten mindestens einer Druckmaschine, nämlich zum Sammeln von Daten, die Steuerungseinrichtungen mindestens einer Druckmaschine in einem steuerungseinrichtungsindividuellen Protokoll und/oder Format speichern, und zum Bereitstellen der Daten an einer Diagnoseeinrichtung, um ein Ereignis, das an mindestens einer Druckmaschine auftritt, auf Grundlage der Daten zu analysieren, mit:
a) einem Sammelmodul (19), mit Hilfe dessen die an den Steuerungseinrichtungen der oder jeder Druckmaschine gespeicherten Daten sammelbar sind;
b) einem Konvertierungsmodul (20), mit Hilfe dessen die gesammelten Daten in ein für alle Daten einheitliches Protokoll und Format konvertierbar sind;
c) einer Datenbank (22), in der die gesammelten und konvertierten Daten speicherbar sind;
d) einem Bereitstellungsmodul (23), mit Hilfe dessen abhängig von mindestens einem frei definierbaren Auswahlkriterium auf die in der Datenbank (22) gespeicherten Daten zugreifbar ist, um die auf Grundlage des oder jedes Auswahlkriteriums ausgewählten Daten an der Diagnoseeinrichtung (17) bereitzustellen.

2. Vorrichtung nach Anspruch 1, **gekennzeichnet durch** ein Dekodiermodul (21), um die gesammelten Daten vom dem Konvertieren derselben zu dekodieren.

3. Vorrichtung nach Anspruch 1 oder 2, **gekennzeichnet durch** ein Aktivierungsmodul (25), um das steuerungseinrichtungsindividuelle Speichern von Daten in den Steuerungseinrichtungen (12, 13, 14, 15, 16) der oder jeder Druckmaschine zu aktivieren oder zu deaktivieren.

4. Vorrichtung nach Anspruch 3, **dadurch gekennzeichnet, dass** über das Aktivierungsmodul (25) weiterhin ein Protokollierungslevel des steuerungseinrichtungsindividuellen Speicherns von Daten beeinflussbar ist.

5. Vorrichtung nach einem oder mehreren der Ansprüche 1 bis 4, **gekennzeichnet durch** ein Auswahlmodul (24), um das oder jedes Auswahlkriterium, auf Grundlage dessen das Bereitstellungsmodul (23) auf die gespeicherten Daten zugreift, zu definieren.

6. Vorrichtung nach Anspruch 5, **dadurch gekennzeichnet, dass** über das Auswahlmodul (24) als Auswahlkriterium ein Zeitfenster definierbar ist, innerhalb dessen die auszuwählenden Daten an den Steuerungseinrichtungen der oder jeder Druckmaschine gespeichert worden sind.

7. Vorrichtung nach Anspruch 5 oder 6, **dadurch gekennzeichnet, dass** über das Auswahlmodul (24) als Auswahlkriterium Steuerungseinrichtungen definierbar sind, an denen die auszuwählenden Daten gespeichert worden sind.

8. Vorrichtung nach einem oder mehreren der Ansprüche 1 bis 7, **dadurch gekennzeichnet, dass** dieselbe Bestandteil einer druckereiindividuellen Druckmaschineninstallation ist.

9. Vorrichtung nach einem oder mehreren der Ansprüche 1 bis 8, **dadurch gekennzeichnet, dass** die Diagnoseeinrichtung (17) Bestandteil eines druckmaschinenherstellerseitigen Ferndiagnosesystems ist, das zumindest mit dem Bereitstellungsmodul (23) Daten über das Internet austauscht.

10. Verfahren zum Sammeln und Bereitstellen von Daten mindestens einer Druckmaschine, nämlich zum Sammeln von Daten, die an Steuerungseinrichtungen mindestens einer Druckmaschine in einem steuerungseinrichtungsindividuellen Protokoll und/oder Format gespeichert werden, und zum Bereitstellen der Daten an einer Diagnoseeinrichtung, um ein Ereignis, das an mindestens einer Druckmaschine auftritt, auf Grundlage der Daten zu analysieren, wobei:
a) die an den Steuerungseinrichtungen der oder jeder Druckmaschine gespeicherten Daten gesammelt werden;
b) die gesammelten Daten in ein für alle Daten einheitliches Protokoll und Format konvertiert werden;
c) die gesammelten und konvertierten Daten gespeichert werden;
d) abhängig von mindestens einem frei definierbaren Auswahlkriterium auf die gespeicherten Daten zugegriffen wird, um die auf Grundlage des oder jedes Auswahlkriteriums ausgewählten Daten an der Diagnoseeinrichtung bereitzustellen.

11. Verfahren nach Anspruch 10, **gekennzeichnet durch** Merkmale nach einem oder mehreren der Ansprüche 1 bis 9.
